# EUROPEAN PATENT APPLICATION

(11) **EP 4 492 538 A1**
(43) Date of publication of application: **15.01.2025**
(21) Application number: 24187197.9
(22) Date of filing: 08.07.2024
(51) Int. Cl.: H01M 10/613, H01M 10/647, H01M 10/6554, H01M 10/6556, H01M 50/112

(54) **POWER STORAGE MODULE**

(30) Priority: 10.07.2023 JP 2023112848
(71) Applicant: TOYOTA JIDOSHA KABUSHIKI KAISHA, Toyota-Shi, Aichi-Ken 471-8571 (JP)
(72) Inventor: SHIMURA, Yosuke, Toyota-shi, 471-8571 (JP); OBAYASHI, Yoshiro, Toyota-shi, 471-8571 (JP); YAMANAKA, Atsushi, Toyota-shi, 471-8571 (JP); CHIHARA, Masashi, Toyota-shi, 471-8571 (JP); SUGIE, Kazuki, Toyota-shi, 471-8571 (JP); YONEKAWA, Kosuke, Toyota-shi, 471-8571 (JP); HIRAO, Yasuhiro, Toyota-shi, 471-8571 (JP)
(74) Representative: D Young & Co LLP

(57) **Abstract**

A power storage module has a case (200) including a case body (210) and at least one partition portion (220). The case body (210) surrounds a plurality of electrode assemblies (100). The partition portion (220) is located between the electrode assemblies (100) adjacent to each other to partition an accommodation space (S) of the case body (210). In the accommodation space (S) of the case body (210), the partition portion (220) forms a first compartment (S1) and a second compartment (S2) adjacent to the first compartment (S1) with the partition portion (220) interposed between the first compartment (S1) and the second compartment (S2). A first cooling path (500) and a second cooling path (600) are formed in the case (200), the first cooling path (500) extends in a portion of the case (200) that faces the first compartment (S1) without the second compartment (S2) in between, and the second cooling path (600) extends in a portion of the case (200) that faces the second compartment (S2) without the first compartment (S1) in between.

## Description

### CROSS REFERENCE TO RELATED APPLICATIONS

This nonprovisional application is based on Japanese Patent Application No. 2023-112848 filed on July 10, 2023 with the Japan Patent Office, the entire contents of which are hereby incorporated by reference.

### BACKGROUND

### Field

The present disclosure relates to a power storage module.

### Description of the Background Art

In the housing of the battery case disclosed in Japanese Patent Laying-Open No. 2019-106372, a lower wall and a plurality of (for example, three, four, or more) sidewalls are integrated to form a space inside, an open surface opposed to the lower wall is provided, and one or more (for example, two, three, four, five, or more) partitions are provided in the space. Thereby, the housing includes a plurality of battery compartments separated by one or more partitions disposed in the space. Each battery compartment can accommodate an electrode assembly.

### SUMMARY

In the battery case disclosed in Japanese Patent Laying-Open No. 2019-106372, heat generated from the electrode assembly in one compartment is easily transmitted to the other compartment through the partition.

The present disclosure is given in view of the above problem, and it is an object of the present disclosure to provide a power storage module capable of efficiently cooling a plurality of electrode assemblies housed in respective compartments.

A power storage module according to the present disclosure includes a plurality of electrode assemblies and a case. The plurality of electrode assemblies are arranged in a first direction. The case houses the plurality of electrode assemblies. The case includes a case body and at least one partition portion. The case body surrounds the plurality of electrode assemblies. The partition portion is located between the electrode assemblies adjacent to each other to partition an accommodation space of the case body. In the accommodation space of the case body, the partition portion forms a first compartment and a second compartment adjacent to the first compartment with the partition portion interposed between the first compartment and the second compartment. A first cooling path and a second cooling path are formed in the case, the first cooling path extends in a portion of the case that faces the first compartment without the second compartment in between, and the second cooling path extends in a portion of the case that faces the second compartment without the first compartment in between.

According to the above configuration, the plurality of electrode assemblies housed respectively in the first compartment and the second compartment can be efficiently cooled by the first cooling path and the second cooling path.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view showing a power storage module according to a first embodiment.
Fig. 2 is a partially exploded perspective view of the power storage module according to the first embodiment.
Fig. 3 is a cross-sectional view of the power storage module of Fig. 1 taken along a line III-III.
Fig. 4 is a cross-sectional view of the power storage module of Fig. 1 taken along a line IV-IV.
Fig. 5 is a cross-sectional view of an electrode assembly of the power storage module of Fig. 1 taken along a line V-V.
Fig. 6 is a partially exploded perspective view of a power storage module according to a second embodiment.
Fig. 7 is a cross-sectional view of the power storage module of Fig. 6 taken along a line VII-VII.

### DESCRIPTION OF THE PREFERRED EMBODIMENTS

Embodiments of the present disclosure will be described with reference to the drawings. In the drawings referred to below, the same or corresponding members are denoted by the same reference numerals.

### (First Embodiment)

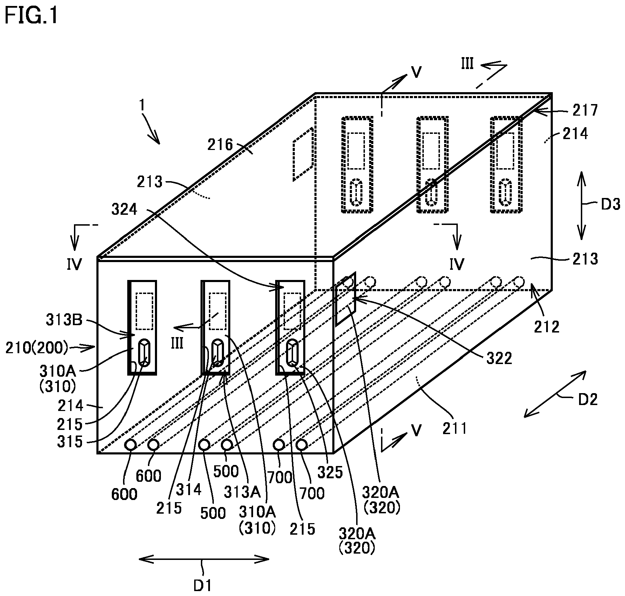

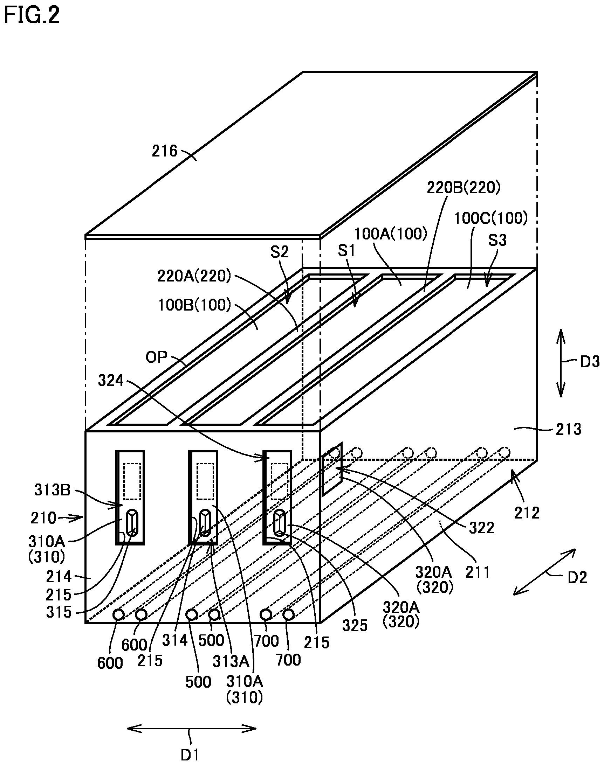

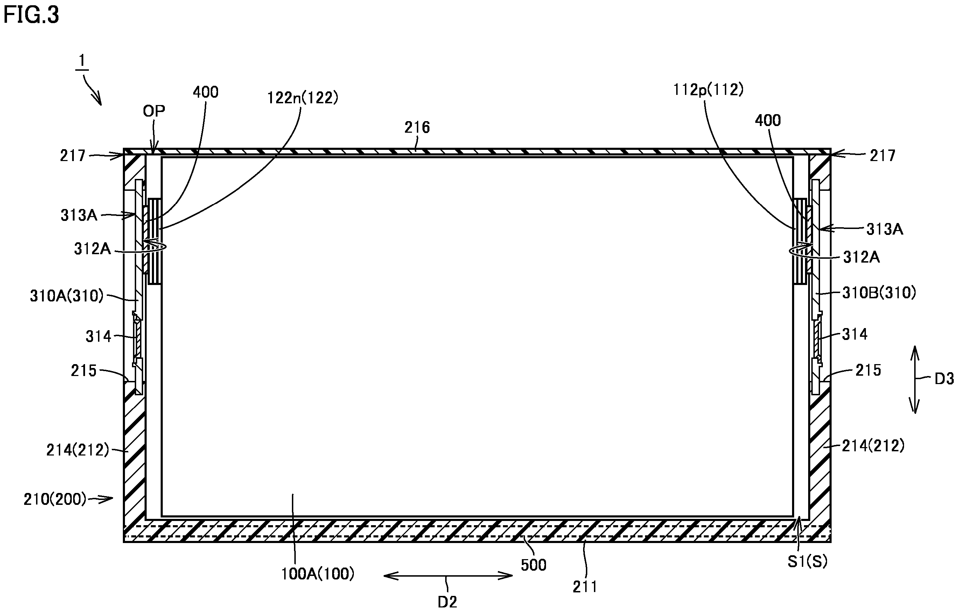

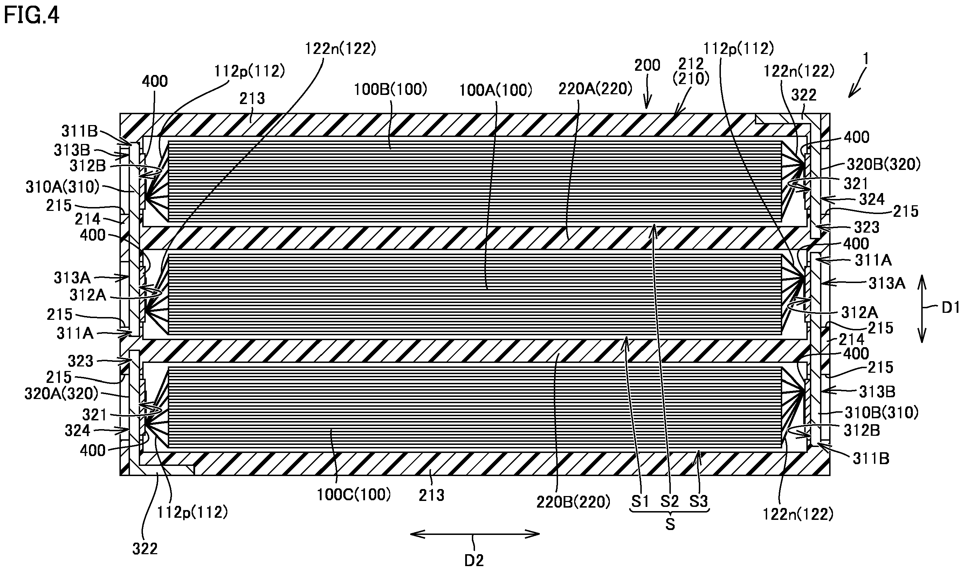

Fig. 1 is a perspective view showing a power storage module according to a first embodiment. Fig. 2 is a partially exploded perspective view of the power storage module according to the first embodiment. Fig. 3 is a cross-sectional view of the power storage module of Fig. 1 taken along a line III-III. Fig. 4 is a cross-sectional view of the power storage module of Fig. 1 taken along a line IV-IV.

As shown in Figs. 1 to 4, a power storage module 1 according to a first embodiment of the present disclosure includes a plurality of electrode assemblies 100, a case 200, at least one connection conductive member 310, and an external conductive member 320. A plurality of electrode assemblies 100 are arranged in the first direction D1. The case 200 houses a plurality of electrode assemblies 100. The connection conductive member 310 is disposed at a side of the plurality of electrode assemblies 100 in the second direction D2, and electrically connects the electrode assemblies 100 adjacent to each other. The second direction D2 is orthogonal to the first direction D1.

In this embodiment, the plurality of electrode assemblies 100 include a first electrode assembly 100A, a second electrode assembly 100B, and a third electrode assembly 100C. The third electrode assembly 100C is located opposite to the second electrode assembly 100B when viewed from the first electrode assembly 100A. In the present embodiment, the second electrode assembly 100B is located at an endmost position in the first direction D1 among the plurality of electrode assemblies 100. Among the plurality of electrode assemblies 100, the third electrode assembly 100C is located at an endmost position in the first direction D1 and opposite to the second electrode assembly 100B. The plurality of electrode assemblies 100 may include four or more electrode assemblies.

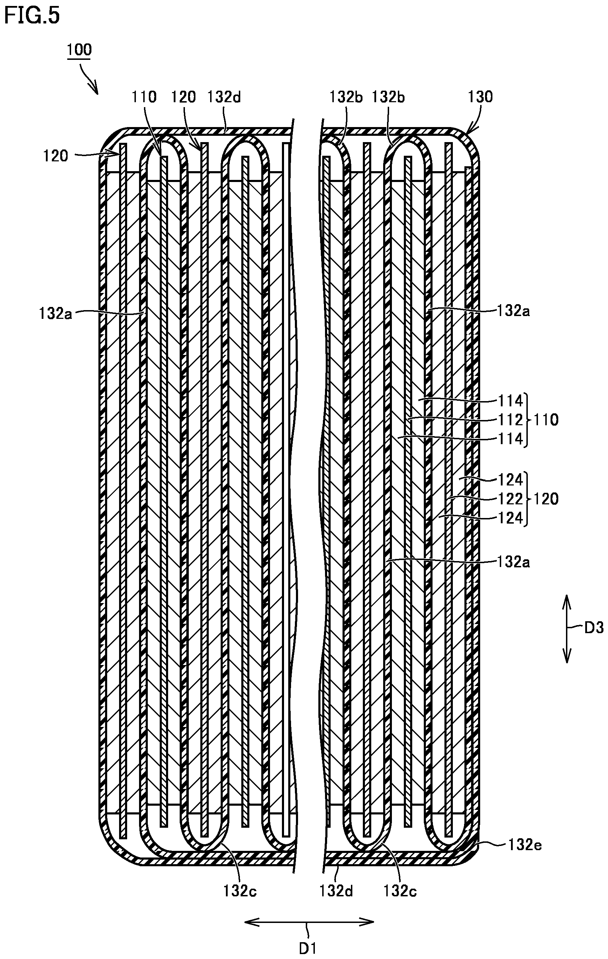

Fig. 5 is a cross-sectional view of the electrode assembly of the power storage module of Fig. 1 taken along a line V-V. As shown in Fig. 5, each of the plurality of electrode assemblies 100 includes a plurality of electrodes 110 and 120 and a separator 130. In this embodiment, the electrode assembly 100 is an electrode assembly for a secondary battery such as a lithium-ion secondary battery.

As shown in Fig. 5, the plurality of electrodes 110 and 120 are arranged in the first direction D1. The plurality of electrodes 110 and 120 have a plurality of positive electrodes 110 and a plurality of negative electrodes 120.

Each positive electrode 110 is formed in a rectangular shape elongated in the second direction D2 (a direction orthogonal to the plane of Fig. 5). Each positive electrode 110 includes a positive electrode current collector foil 112 and a positive electrode active material layer 114 provided on both surfaces of the positive electrode current collector foil 112. The positive electrode current collector foil 112 has a positive electrode tab 112p (see Figs. 3 and 4) in which the positive electrode active material layer 114 is not provided. The positive electrode tab 112p protrudes toward one side in the second direction D2.

Each negative electrode 120 is formed in a rectangular shape elongated in the second direction D2. Each negative electrode 120 includes a negative electrode current collector foil 122 and a negative electrode active material layer 124 provided on both surfaces of the negative electrode current collector foil 122. The negative electrode current collector foil 122 has a negative electrode tab 122n (see Figs. 3 and 4) in which the negative electrode active material layer 124 is not provided. The negative electrode tab 122n protrudes toward the other side in the second direction D2.

The separator 130 insulates the positive electrode 110 from the negative electrode 120. The separator 130 is made from an insulating material, and has minute voids that allow penetration of ions. As shown in Fig. 5, the separator 130 is folded.

The separator 130 has a rectangular shape before being folded. The separator 130 is folded between the electrodes 110 and 120. The separator 130 includes a plurality of intervening portions 132a, a plurality of upper folded portions 132b, a plurality of lower folded portions 132c, and an outermost covering portion 132d.

Each intervening portion 132a is interposed between a pair of electrodes 110 and 120 adjacent to each other in one direction. That is, each intervening portion 132a has a function of insulating the positive electrode 110 and the negative electrode 120. Each intervening portion 132a is formed of a rectangular region.

The upper folded portions 132b connect an upper end portion of one of the plurality of intervening portions 132a and an upper end portion of the intervening portion 132a adjacent to the one intervening portion 132a on one side of the plurality of intervening portions 132a in one direction. In the present embodiment, the upper folded portion 132b is disposed above the positive electrode 110.

Each lower folded portion 132c connects a lower end portion of the one intervening portion of the plurality of intervening portions 132a and a lower end portion of the intervening portion 132a adjacent to the one intervening portion on the other side in one direction of the plurality of intervening portions 132a. In the present embodiment, the lower folded portion 132c is disposed below the negative electrode 120. In other words, the negative electrode 120 is disposed on the lower folded portion 132c.

The outermost covering portions 132d collectively cover the upper folded portions 132b and the lower folded portions 132c. More specifically, the outermost covering portion 132d covers all of the electrodes 110 and 120, all of the intervening portions 132a, all of the upper folded portions 132b, and all of the lower folded portions 132c while winding around the central axis parallel to the second direction D2. The terminal end 132e of the outermost covering portion 132d is set so as not to overlap the positive electrode active material layer 114 and the negative electrode active material layer 124 in one direction. In the present embodiment, the terminal end 132e of the outermost covering portion 132d is provided below each of the electrodes 110 and 120. The peripheral surfaces and bottom surfaces of the plurality of electrodes 110 and 120 and the separator 130 may or may not be covered with an insulating film. The peripheral surfaces and bottom surfaces of the plurality of electrodes 110, 120 and the separator 130 may be in direct contact with the case 200.

As shown in Figs. 1 to 4, the case 200 includes a case body 210 and at least one partition portion 220.

The case body 210 has electrical insulation property at least on the surface facing the electrode assembly 100. The case body 210 surrounds the plurality of electrode assemblies 100.

The case body 210 includes a bottom wall portion 211, a peripheral sidewall portion 212, a hole 215, a lid 216, and a weld portion 217.

The bottom wall portion 211 is made from a resin composition. In the case body 210, the bottom wall portion 211 is positioned on one side in the third direction D3. The third direction D3 is orthogonal to both the first direction D1 and the second direction D2. The bottom wall portion 211 extends along the first direction D1 and the second direction D2. When viewed from the third direction D3, the bottom wall portion 211 has a rectangular outer shape.

The peripheral sidewall portion 212 is made from a resin composition and integrally formed with the bottom wall portion 211. The peripheral sidewall portion 212 extends upright in the third direction D3 from the peripheral edge of the bottom wall portion 211, and forms an opening OP that opens in the side opposite to the bottom wall portion 211.

The peripheral sidewall portion 212 includes a pair of first wall portions 213 and a pair of second wall portions 214. The pair of first wall portions 213 is arranged in the first direction D1. The pair of first wall portions 213 extends along the second direction D2. The pair of second wall portions 214 are arranged in the second direction D2. The pair of second wall portions 214 extends along the first direction D1. The pair of second wall portions 214 may not be integrally formed with the bottom wall portion 211 and the pair of first wall portions 213.

The hole 215 is provided to expose a part of the connection conductive member 310 to the outside of the case body 210. The hole 215 is closed by the connection conductive member 310. Specifically, the hole 215 is provided in the peripheral sidewall portion 212, and more specifically, is provided in the second wall portion 214.

In the present embodiment, the case body 210 has a plurality of holes 215 as the above-described holes 215. Among the plurality of holes 215, the external conductive member 320 is exposed from another hole 215 different from the hole 215 described above.

The lid 216 closes the opening OP. In the present embodiment, at least a portion of the lid 216 facing the peripheral sidewall portion 212 is made of a resin composition. The lid 216 has a plate-like or film-like outer shape.

The lid 216 may be a stack including a resin layer made of the resin composition and a barrier layer. Specifically, the lid 216 may be a laminated film in which a barrier layer made of aluminum or the like is laminated on a resin layer. The lid 216 may be a plate-like member in which a metal plate such as aluminum is laminated on a resin layer. The barrier layer or metal plate may be disposed within the resin layer.

The weld portion 217 is formed by thermally welding the lid 216 and the peripheral sidewall portion 212 to each other. Instead of forming the weld portion 217, the lid 216 and the peripheral sidewall portion 212 may be joined to each other by other known joining methods such as an adhesive.

When the pair of second wall portions 214 is not integrally formed with the other portions as described above, the lid 216 may be integrally formed with the pair of second wall portions 214 and the partition portion 220 described later.

The partition portion 220 has electrical insulation property at least on the surface facing the electrode assembly 100. The partition portion 220 is positioned between the electrode assemblies 100 adjacent to each other to partition the accommodation space S of the case body 210. The case 200 according to the present embodiment includes a plurality of partition portions 220. The plurality of partition portions 220 includes a first partition portion 220A and a second partition portion 220B. The plurality of partition portions 220 may include three or more partition portions.

In the accommodation space S of the case body 210, a first compartment S1 and a second compartment S2 adjacent to the first compartment S1 with the partition portion 220 (first partition portion 220A) interposed therebetween are formed by the partition portion 220 (first partition portion 220A). In addition, a third compartment S3 adjacent to the first compartment S1 with the first compartment S1 and the second partition portion 220B interposed therebetween is formed by the second partition portion 220B in the accommodation space S. The third compartment S3 is positioned opposite to the second compartment S2 as seen from the first compartment S1.

In the case 200, a plurality of first cooling paths 500, a plurality of second cooling paths 600, and a plurality of third cooling paths 700 are formed. These cooling paths are configured such that refrigerant can flow through them. The refrigerant may be a liquid or a gas such as air. The system including the power storage module 1 according to the present embodiment may further include a cooler. The cooler may cool the refrigerant flowing through these cooling paths. The system may be a battery cooling system provided in a vehicle.

Each of the plurality of first cooling paths 500 extends inside a portion facing the first compartment S1 without interposing the second compartment S2.

Specifically, the portion faces the first compartment S1 without interposing other sections (the second compartment S2 and the third compartment S3) other than the first compartment S1. Each of the first cooling paths 500 extends along the second direction D2. Each of the first cooling paths 500 extends from one side to the other side of the case 200. Each of the first cooling paths 500 is a through hole. Each of the first cooling paths 500 has openings on one side and the other side of the case 200, respectively.

In the present embodiment, the first cooling path 500 is specifically provided in the case body 210. The first cooling path 500 is aligned with the first compartment S1 in the third direction D3. More specifically, the first cooling path 500 is positioned inside the bottom wall portion 211 in the first direction D1 and the third direction D3. The first cooling path 500 has openings on one side and the other side in the second direction D2 of the bottom wall portion 211.

Each of the plurality of second cooling paths 600 extends inside a portion facing the second compartment S2 without interposing the first compartment S1.

Specifically, the portion faces the second compartment S2 without interposing other sections (the first compartment S1 and the third compartment S3) other than the second compartment S2. Each of the second cooling paths 600 extends along the second direction D2. Each of the second cooling paths 600 extends from one side to the other side of the case 200. Each of the second cooling paths 600 is a through hole. Each of the second cooling paths 600 has openings on one side and the other side of the case 200, respectively.

In the present embodiment, specifically, the second cooling path 600 is provided in the case body 210. The second cooling path 600 is aligned with the second compartment S2 in the third direction D3. More specifically, the second cooling path 600 is located inside the bottom wall portion 211 in the first direction D1 and the third direction D3. The second cooling path 600 has openings on one side and the other side in the second direction D2 of the bottom wall portion 211.

The third cooling path 700 extends inside a portion facing the third compartment S3 without passing through other sections (the first compartment S1 and the second compartment S2) other than the third compartment S3. In this embodiment, the third cooling path 700 is aligned with the third compartment S3 in the third direction D3. Except for these configurations, the third cooling path 700 may have the same configuration as the first cooling path 500 or the same configuration as the second cooling path 600.

Among the plurality of electrode assemblies 100, the first electrode assembly 100A is accommodated in the first compartment S1. The second electrode assembly 100B is accommodated in the second compartment S2. The third electrode assembly 100C is accommodated in the third compartment. An electrolyte solution is injected into the accommodation space S (the first compartment S1, the second compartment S2, and the third compartment S3). The electrolyte solution is not shown. The method of injecting the electrolyte solution is not particularly limited. The electrolyte solution may be injected from the opening OP before the opening OP is closed by the lid 216.

The partition portions 220 are made from a resin composition and integrally formed with the bottom wall portion 211 and the peripheral sidewall portion 212. In this embodiment, the plurality of partition portions 220 and the lid 216 may or may not be joined to each other by thermal welding.

In the present embodiment, examples of the above-described "integrally formed" method include a method in which molding and joining of each component are performed simultaneously in one step by a well-known method such as injection molding, and a method in which a plurality of components are separately formed and then joined to each other by a well-known joining method such as welding, or adhesion.

Here, a resin composition that may form the bottom wall portion 211, the peripheral sidewall portion 212, the lid 216, and the plurality of partition portions 220 in the present embodiment will be described.

The resin composition may contain, as a base polymer, polycarbonate, polyethylene, polypropylene, polyvinyl, polyamide, polyester, polyphenylene sulfide (PPS), polyphenylene ether, polystyrene, polycyclic olefin copolymer, acrylonitrile-butadiene-styrene copolymer, liquid crystal polymer (LCP), fluororesin, a mixture thereof, an alloy thereof, or a copolymer thereof. The base polymer is not limited to them.

The resin composition may contain, as a base polymer, polyolefin, liquid crystal polymer, or fluororesin. The polyolefin may include High-Density Polyethylene (HDPE). The High-Density Polyethylene, liquid crystal polymer, or fluororesin has a relatively low water vapor permeability. Therefore, the moisture permeability resistance of the case 200 including the resin composition containing them is improved.

The liquid crystal polymer may include structural units derived from an oligomer of hydroxybenzoic acid. The liquid crystal polymer may further contain two or more kinds selected from the group consisting of HNA (2,6-hydroxynaphthoic acid), TPA (terephthalic acid), IPA (isophthalic acid), HQ (hydroquinone), BP (biphenol), PET (polyethylene terephthalate) and PEN (polyethylene naphthalate), in addition to the oligomer of hydroxybenzoic acid, and may be copolymerized with the oligomer of hydroxybenzoic acid (HBA).

The fluororesin may be polytetrafluoroethylene (PTFE), polyvinylidene difluoride (PVDF), polychlorotrifluoroethylene (PCTFE), or a mixture thereof, or a copolymer thereof. The fluororesin is hydrophobic. Thus, relative to the total weight of the resin composition, the resin composition may contain, for example, about 20% by weight or less, about 15% by weight or less, about 10% by weight or less, about 3% by weight to about 10% by weight, about 5% by weight to about 10% by weight of fluororesin. When the content of the fluororesin falls within the above ranges, it is considered that the molded article made from the resin composition has an effect of blocking moisture from the surface of the molded article in contact with the outside air.

In the present embodiment, it is preferable that the base polymer of the resin composition constituting the lid 216 and the base polymer of the resin composition constituting the peripheral sidewall portion 212 and the plurality of partition portions 220 are the same. Thereby, these components are easily welded to each other. Consequently, the weld portion 217 can be easily formed. From the viewpoint of performing thermal welding, the base polymer is preferably polyethylene or polypropylene.

The resin composition may further contain an inorganic hygroscopic agent or graphite from the viewpoint of suppressing water vapor permeability. The resin composition may further contain a substance known as an existing moisture barrier substance in addition to graphite.

The bottom wall portion 211, the peripheral sidewall portion 212, the lid 216, and the plurality of partition portions 220 may be made of metal. In this case, the portion facing the accommodation space S is preferably covered with an insulating material. In this case, an insulating member is preferably disposed between the peripheral sidewall portion 212 and the connection conductive member 310 and the external conductive member 320.

Next, the connection conductive member 310 and the external conductive member 320 will be described. In the present embodiment, the power storage module 1 includes a plurality of connection conductive members 310. The plurality of connection conductive members 310 includes a first connection conductive member 310A and a second connection conductive member 310B. The plurality of connection conductive members 310 may include three or more connection conductive members. In the present embodiment, the power storage module 1 includes the first external conductive member 320A and the second external conductive member 320B as the external conductive member 320.

The connection conductive member 310 (the first connection conductive member 310A and the second connection conductive member 310B) includes a first end portion 311A, a second end portion 311B, a first inner surface portion 312A, a second inner surface portion 312B, a first outer surface portion 313A, and a second outer surface portion 313B.

In the first connection conductive member 310A, the first end portion 311A is an end portion, located at one side in the first direction D1, of the first connection conductive member 310A, and is embedded in the peripheral sidewall portion 212 (one of the second wall portions 214) of the case body 210. The second end portion 311B is an end portion, located at the other side in the first direction D1, of the first connection conductive member 310A, and is embedded in the peripheral sidewall portion 212 (one of the second wall portions 214) of the case body 210.

In the first connection conductive member 310A, the first inner surface portion 312A is exposed to the first compartment S1 and electrically connected to the electrode tab (negative electrode tab 122n) of the first electrode assembly 100A. The second inner surface portion 312B is exposed to the second compartment S2 and electrically connected to the electrode tab (positive electrode tab 112p) of the second electrode assembly 100B.

In the second connection conductive member 310B, the first end portion 311A is an end portion, located at one side in the first direction D1, of the second connection conductive member 310B, and is embedded in the peripheral sidewall portion 212 (the other second wall portion 214) of the case body 210. The second end portion 311B is an end portion, located at the other side in the first direction D1, of the second connection conductive member 310B, and is embedded in the peripheral sidewall portion 212 (the other second wall portion 214) of the case body 210.

In the second connection conductive member 310B, the first inner surface portion 312A is exposed to the first compartment S1 and electrically connected to the electrode tab (positive electrode tab 112p) of the first electrode assembly 100A. The second inner surface portion 312B is exposed to the third compartment S3 and electrically connected to the electrode tab (negative electrode tab 122n) of the third electrode assembly 100C.

In each of the connection conductive members 310, the first outer surface portion 313A is located opposite to the first inner surface portion 312A, and is exposed to the outside of the case body 210 through the hole 215. Each of the connection conductive members 310 is provided with a pressure release valve 314 capable of releasing the pressure on the first inner surface portion 312A side to the first outer surface portion 313A side.

In each of the connection conductive members 310, the second outer surface portion 313B is located opposite to the second inner surface portion 312B and is exposed to the outside of the case body 210 through the other hole 215. Each of the connection conductive members 310 is provided with another pressure release valve 315 capable of releasing the pressure on the second inner surface portion 312B side to the first outer surface portion 313A side.

The first external conductive member 320A is located at a side of the third electrode assembly 100C in the second direction D2, and is electrically connected to the third electrode assembly 100C. The second external conductive member 320B is located at a side of the second electrode assembly 100B in the second direction D2, and is electrically connected to the second electrode assembly 100B.

Each of the external conductive members 320 includes a third inner surface portion 321, an external connection surface portion 322, and an embedded end portion 323.

In the first external conductive member 320A, the third inner surface portion 321 is exposed to the accommodation space S (third compartment S3), and is electrically connected to the electrode tab (positive electrode tab 112p) of the third electrode assembly 100C. In the second external conductive member 320B, the third inner surface portion 321 is exposed to the accommodation space S (second compartment S2), and is electrically connected to the electrode tab (negative electrode tab 122n) of the second electrode assembly 100B.

In each of the external conductive members 320, the external connection surface portion 322 is exposed to the outside of the case body 210 in the first direction D1. The embedded end portion 323 is an end portion opposite to the external connection surface portion 322 in the first direction D1, and is embedded in the case body 210.

Each external conductive member 320 further includes a third outer surface portion 324. The third outer surface portion 324 is located opposite to the third inner surface portion 321. The third outer surface portion 324 is exposed to the outside of the case body 210 through one of the plurality of holes 215. Each of the external conductive members 320 is provided with another pressure release valve 325 capable of releasing the pressure on the third inner surface portion 321 side to the third outer surface portion 324 side.

Each of the connection conductive members 310 and each of the external conductive members 320 are made of a metal such as stainless steel, aluminum, or copper.

In the present embodiment, the power storage module 1 further includes a plurality of current collector members 400. The plurality of current collector members 400 are disposed between the positive electrode tab 112p of each electrode assembly 100 and the connection conductive member 310 or the external conductive member 320, and between the negative electrode tab 122n of each electrode assembly 100 and the connection conductive member 310 or the external conductive member 320. Each current collector member 400 is joined to each positive electrode tab 112p or each negative electrode tab 122n by welding. Each of the current collector members 400 is joined to the first inner surface portion 312A, the second inner surface portion 312B, or the third inner surface portion 321 by welding.

The plurality of current collector members 400 may comprise a metallic material such as aluminum or copper, for example. The power storage module 1 may not include the current collector member 400. When the current collector member 400 is not included, each of the positive electrode tabs 112p and each of the negative electrode tabs 122n may be directly joined to the adjacent first inner surface portion 312A, the second inner surface portion 312B, or the third inner surface portion 321 by welding.

As described above, the power storage module 1 according to the first embodiment of the present disclosure includes a plurality of electrode assemblies 100 and the case 200. The plurality of electrode assemblies 100 are arranged in the first direction D1. The case 200 houses the plurality of electrode assemblies 100. The case 200 includes a case body 210 and at least one partition portion 220. The case body 210 surrounds the plurality of electrode assemblies 100. The partition portion 220 is located between the electrode assemblies 100 adjacent to each other to partition the accommodation space S of the case body 210. In the accommodation space S of the case body 210, the partition portion 220 forms a first compartment S1 and a second compartment S2 adjacent to the first compartment S1 with the partition portion 220 interposed between the first compartment and the second compartment. In the case 200, a first cooling path 500 extending in a portion facing the first compartment S1 without the second compartment S2 in between, and a second cooling path 600 extending in a portion facing the second compartment S2 without the first compartment S 1 in between are formed.

According to the above configuration, the plurality of electrode assemblies 100 accommodated respectively in the first compartment S1 and the second compartment S2 can be efficiently cooled by the first cooling path 500 and the second cooling path 600. Further, since the first cooling path 500 and the second cooling path 600 are formed inside the case 200, the number of components of the power storage module 1 can be reduced.

In the present embodiment, the first cooling path 500 and the second cooling path 600 are provided in the case body 210. As described above, since the first cooling path 500 and the second cooling path 600 are provided in the case body 210 relatively close to the external space of the case 200, the state of each cooling path can be relatively easily managed.

### (Second Embodiment)

Hereinafter, a power storage module according to a second embodiment of the present disclosure will be described. The power storage module according to the second embodiment of the present disclosure differs from the power storage module according to the first embodiment of the present disclosure in a portion where each cooling path is formed. Therefore, in the power storage module according to the second embodiment of the present disclosure, description of the same configuration and effect as in the first embodiment will not be repeated.

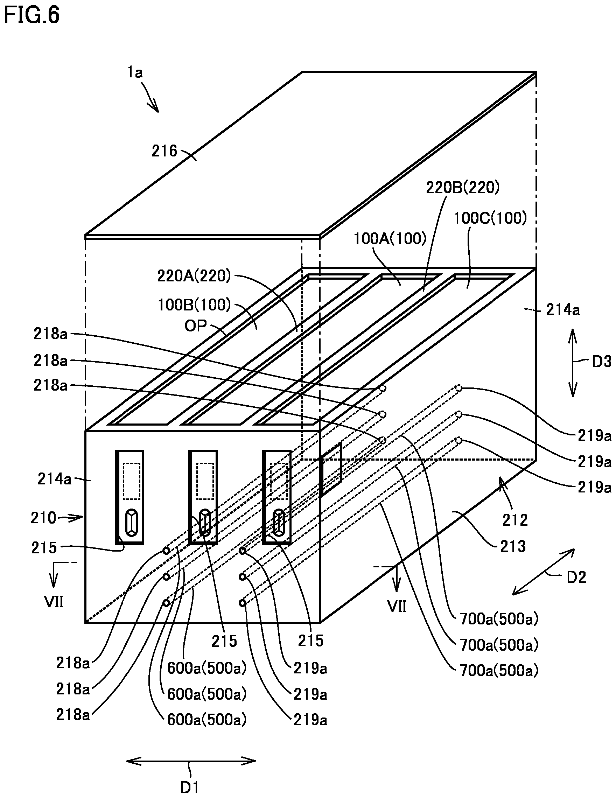

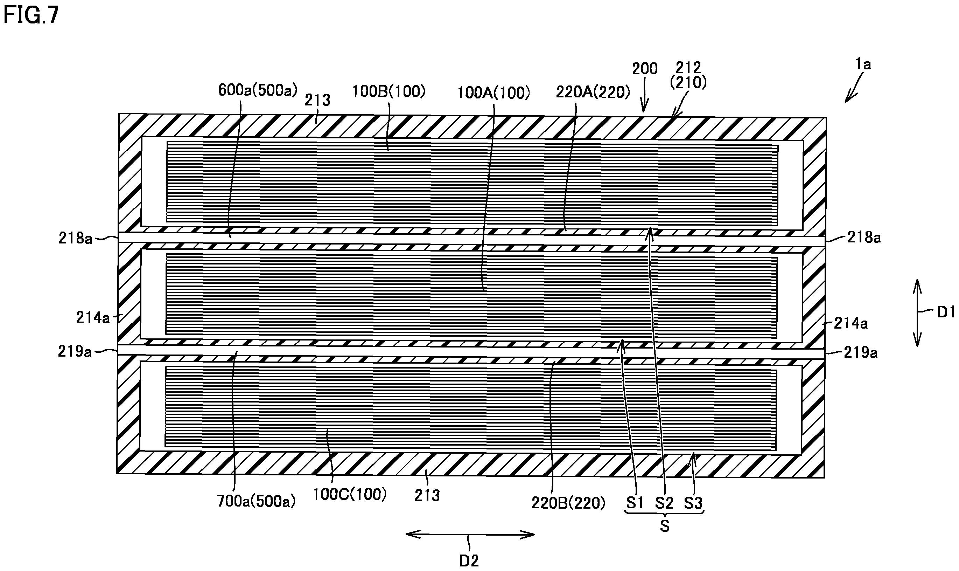

Fig. 6 is an exploded perspective view partially disassembled a power storage module according to a second embodiment. Fig. 7 is a cross-sectional view of the power storage module of Fig. 6 taken along line VII-VII of Fig. 6.

As shown in Figs. 6 and 7, in the power storage module 1a according to the second embodiment of the present disclosure, the first cooling path 500a and the second cooling path 600a are formed integrally with each other in the partition portion 220 (first partition portion 220A) separating the first compartment S 1 and the second compartment S2 from each other.

According to the above configuration, even when one of the first electrode assembly 100A accommodated in the first compartment S1 and the second electrode assembly 100B accommodated in the second compartment S2 generates excessive heat, it is possible to further suppress the heat from being transmitted to the other electrode assembly due to the excessive heat generation by the cooling path formed in the partition portion 220.

Specifically, one cooling path formed inside the first partition portion 220A functions as either the first cooling path 500a or the second cooling path 600a. For the sake of convenience, the cooling path will be described as a second cooling path 600a.

In this embodiment, the second cooling path 600a is aligned with the second compartment S2 and the first compartment S1 in the first direction D1. Specifically, the second cooling path 600a is located inside the first partition portion 220A in the first direction D1 and the third direction D3. The second cooling path 600a has openings on one side and the other side in the second direction D2 of the first partition portion 220A. A plurality of first holes 218a are formed in the pair of second wall portions 214a so as to correspond to these openings. Each of the first holes 218a communicates the second cooling path 600a with the outside space of the case 200.

Further, the first cooling path 500a is also formed inside the second partition portion 220B. Specifically, the first cooling path 500a and the third cooling path 700a are formed integrally with each other in the second partition portion 220B.

Specifically, one cooling path formed inside the second partition portion 220B functions as either the first cooling path 500a or the third cooling path 700a. For the sake of convenience, the cooling path will be described as a third cooling path 700a.

In this embodiment, the third cooling path 700a is aligned with the third compartment S3 and the first compartment S1 in the first direction D1. Specifically, the third cooling path 700a is located inside the second partition portion 220B in the first direction D1 and the third direction D3. The third cooling path 700a has openings on one side and the other side in the second direction D2 of the second partition portion 220B. A plurality of second holes 219a corresponding to these openings are formed in the pair of second wall portions 214a. Each of the second holes 219a communicates the third cooling path 700a with the outside space of the case 200.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage module comprising:
a plurality of electrode assemblies (100) arranged in a first direction (D1); and
a case (200) housing the plurality of electrode assemblies (100),
the case (200) including:
a case body (210) surrounding the plurality of electrode assemblies (100); and
at least one partition portion (220) located between the electrode assemblies (100) adjacent to each other to partition an accommodation space (S) of the case body (210), wherein
in the accommodation space (S) of the case body (210), the partition portion (220) forms a first compartment (S1) and a second compartment (S2) adjacent to the first compartment (S1) with the partition portion (220) interposed between the first compartment (S1) and the second compartment (S2), and
a first cooling path (500) and a second cooling path (600) are formed in the case (200), the first cooling path (500) extends in a portion of the case (200) that faces the first compartment (S1) without the second compartment (S2) in between, and the second cooling path (600) extends in a portion of the case (200) that faces the second compartment (S2) without the first compartment (S1) in between.

2. The power storage module according to claim 1, wherein the first cooling path (500) and the second cooling path (600) are provided in the case body (210).

3. The power storage module according to claim 1, wherein the first cooling path (500a) and the second cooling path (600a) are formed integrally with each other in the partition portion (220) separating the first compartment (S1) and the second compartment (S2) from each other.
